Europäisches Patentamt

European Patent Office

Office européen des brevets

(19)

(11) **EP 0 890 110 B1**

(12) **EUROPÄISCHE PATENTSCHRIFT**

(45) Veröffentlichungstag und Bekanntmachung des Hinweises auf die Patenterteilung:
**19.09.2001 Patentblatt 2001/38**

(51) Int Cl.$^7$: **G01R 31/00**, H04L 12/40, H04L 12/26

(21) Anmeldenummer: **97916391.2**

(22) Anmeldetag: **26.03.1997**

(86) Internationale Anmeldenummer:
**PCT/EP97/01534**

(87) Internationale Veröffentlichungsnummer:
**WO 97/36184 (02.10.1997 Gazette 1997/42)**

(54) **VERFAHREN ZUM PRÜFEN DER MASSEKONTAKTIERUNG VON TEILEN EINES VERNETZTEN SYSTEMS**

PROCESS FOR TESTING THE GROUND CONTACT OF PARTS OF A NETWORKED SYSTEM

PROCEDE POUR LE CONTROLE DES CONNEXIONS DE MASSE DE PIECES D'UN SYSTEME FORMANT UN RESEAU

(84) Benannte Vertragsstaaten:
**AT DE ES FR GB IT SE**

(30) Priorität: **26.03.1996 DE 19611944**
**19.11.1996 WOPCT/EP96/05088**

(43) Veröffentlichungstag der Anmeldung:
**13.01.1999 Patentblatt 1999/02**

(73) Patentinhaber: **DaimlerChrysler AG**
**70567 Stuttgart (DE)**

(72) Erfinder:
• **MINUTH, Jürgen**
**D-73054 Eislingen (DE)**
• **SETZER, Jürgen**
**D-75428 Illingen (DE)**
• **Schwarz, Günther**
**73239 Kirchheim (DE)**
• **Reeb, Max**
**73104 Böblingen (DE)**

(74) Vertreter: **Weiss, Klaus et al**
**c/o Daimler-Benz Aktiengesellschaft,**
**FTP/S C 106**
**70546 Stuttgart (DE)**

(56) Entgegenhaltungen:
**EP-A- 0 474 907          EP-A- 0 614 298**
**DE-A- 3 826 774**

• **IBM TECHNICAL DISCLOSURE BULLETIN, Bd. 32, Nr. 9B, 1.Februar 1990, Seiten 301-303, XP000082359 "COMMUNICATION BUS TRANSMITTER PROVIDING BUS-FAULT ANALYSIS"**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zum Prüfen der Massekontaktierung von Teilnehmern eines vernetzten Systems gemäß den Patentansprüchen 1, 2 und 7 sowie eine Vorrichtung zum Prüfen der Massekontaktierung von Teilnehmern eines vernetzten Systems gemäß Anspruch 16.

Beispielsweise im Bereich der Kraftfahrzeuge ist es bekannt, durch eine Vernetzung mehrerer Steuergeräte einen Datenaustausch zwischen den einzelnen Steuergeräten zu ennöglichen. Indem ein Datenprotokoll erstellt wird, das über eine oder mehrere Leitungen zwischen den Steuergeräten versandt wird und in dem die entsprechenden Daten an den entsprechenden Stellen eingetragen und gelesen werden können, kann in erheblichem Umfang Aufwand und Material bei der Verkabelung gespart werden. Ohne einen Datenbus wäre für jede zwischen den jeweiligen Steuergeräten auszutauschende Information ein separates Kabel notwendig.

Daten werden in das Protokoll dieses Datenbusses geschrieben und gelesen, indem die Leitung bzw. die Leitungen für eine bestimmte Zeitdauer mit einem bestimmten Spannungspegel beaufschlagt werden. Dazu ist es notwendig, daß diese Steuergeräte ein nahezu identisches Bezugspotential aufweisen. Im Falle eines Kraftfahrzeuges ist dies die Fahrzeugmasse, mit der alle elektrischen Geräte in einem Kraftfahrzeug als Äquipotentialfläche kontaktiert sind. Vernetzte Systeme der beschriebenen Art sind z.B. als CAN-Systeme bekannt geworden.

Aus der EP 0 614 298 A2 ist eine Schaltungsanordnung bekannt, durch die ein Totalausfall des gesamten Netzes vermieden werden soll, wenn an einem der Teilnehmer des vernetzten Systems ein Abriß der Masseverbindung auftritt oder ein Kurzschluß zum Versorgungspotential vorliegt.

Weiterhin ist aus der EP 0 474 907 A1 ein Verfahren zur Fehlererkermung bei einem vemetzten System bekannt, bei dem die Teilnehmer des vernetzten Systems ringförmig miteinander verbunden sind. Ein Drahtabriß an einer Stelle des vernetzten Systems kann bei diesem Verfahren erkannt werden, indem die Daten von einem Teilnehmer ausgehend in beide Richtungen gesandt werden. Wenn ein Empfänger die Daten nur aus einer Richtung empfängt, kann daraus geschlossen werden, daß zwischen den beiden Teilnehmern auf dem Weg, der der anderen Richtung entspricht, ein Drahtabriß vorliegt.

Wenn sich nun die Massekontaktierung einzelner Steuergeräte relativ zu anderen Steuergeräten verschlechtert, kann es zu Störungen der Datenübertragung kommen, weil sich die Spannungspegel der einzelnen Teilnehmer des vernetzten Systems gegeneinander verschieben. Wenn die Verschiebung so stark ist, daß diese aus dem Toleranzbereich herausführt, ist nicht mehr sichergestellt, daß Wechsel der Spannungspegel auf dem Datenbus erkannt werden können.

Es ist deshalb das Ziel der vorliegenden Erfindung, die Verschlechterung der Massekontaktierung einzelner Teilnehmer des vernetzten Systems möglichst frühzeitig zu erkennen.

Bei einem vernetzten System, bei dem über wenigstens eine Leitung Daten gesendet und empfangen werden, wobei wenigstens eine Leitung an jedem Teilnehmer des vernetzten Systems über eine Widerstandsanordnung sowie eine Kontaktierung mit einem gemeinsamen Potential der Teilnehmer verbunden ist und über einen steuerbaren Schalter mit einem weiteren Potential verbindbar ist, wird diese Aufgabe erfindungsgemäß gelöst, indem zum Prüfen der Massekontaktierung von Teilnehmern des vernetzten Systems die Spannung über der Widerstandsanordnung mit einem vorgegebenen Potential verglichen wird, wenn die Leitung ein Potential in einem eingeschwungenen Zustand aufweist, wobei aus einem Vergleich der Spannung über der Widerstandsanordnung mit dem vorgegebenen Potential auf den Zustand der Massekontaktierung des Teilnehmers geschlossen wird.

Dadurch kann vorteilhaft mit einfachen Mitteln eine fehlerhafte Massekontaktierung frühzeitig erkannt werden, ohne daß die laufende Übertragung von Daten beeinträchtigt wird. Bei einem CAN-Netzwerk beschreibt der Gegenstand nach Anspruch 1 die Möglichkeit, eine Prüfung der Massekontaktierung mittels der CAN_H-Leitung festzustellen.

Eine weitere erfindungsgemäße Lösung ist in Anspruch 2 beschrieben, nach dem bei einem vernetzten System, bei dem über wenigstens eine Leitung Daten gesendet und empfangen werden, wobei wenigstens eine Leitung an jedem Teilnehmer über eine Widerstandsanordnung mit einem teilnehmerspezifischen Potential der Teilnehmer verbunden ist und über einen steuerbaren Schalter sowie eine Kontaktierung mit einem gemeinsamen Potential verbindbar ist, ein erfindungsgemäßes Verfahren realisiert wird, indem die Spannung über der Widerstandsanordnung mit einem vorgegebenen Potential verglichen wird, wenn die Leitung ein Potential in einem eingeschwungenen Zustand aufweist, wobei aus einem Vergleich der Spannung über der Widerstandsanordnung mit dem vorgegebenen Potential auf den Zustand der Massekontaktierung des Teilnehmers geschlossen wird.

Auch dadurch kann vorteilhaft mit einfachen Mitteln eine fehlerhafte Massekontaktierung frühzeitig erkannt werden, ohne daß die laufende Übertragung von Daten beeinträchtigt wird. Bei einem CAN-Netzwerk beschreibt der Gegenstand nach Anspruch 2 die Möglichkeit, eine Prüfung der Massekontaktierung mittels der CAN_L-Leitung festzustellen.

Bei beiden Gegenständen wird eine lokale Verschiebung der Spannung aufgrund einer fehlerhaften Massekontaktierung mit dem Potential auf der jeweiligen Datenleitung verglichen. Auf den Datenleitungen liegt - über die Verbindung an jedem Steuergerät, d.h. jedem Teilnehmer des vernetzten Systems - ein "gemitteltes" Potential über die Verbindung an allen Teilnehmern an. Ein eventueller Massefehler eines einzelnen Teilnehmers hat also nur geringen Einfluß auf das Potential auf der Datenleitung. Dadurch entsteht also bei einem Massefehler eines einzelnen Teilnehmers eine Spannungsdifferenz über der Widerstandsanordnung, die ausgewertet werden kann.

Bei einem Umschalten der steuerbaren Schalter wechselt dabei das Potential auf den Datenleitungen. Bei einem solchen Potentialwechsel kommt es zu Überschwingern, die das Ergebnis einer Auswertung der Spannung über der Widerstandsanordnung verfälschen können. Deswegen soll ein Vergleich erst dann stattfinden, wenn sich das Potential auf der Datenleitung in einem eingeschwungenen Zustand befindet

Bei der Ausgestaltung des Verfahrens nach Anspruch 3 ist das Potential im eingeschwungenen Zustand das gemeinsame Potential.

Durch einen solchen Vergleich können Massefehler unmittelbar festgestellt werden. Durch den Vergleich im Zustand des eingeschwungenen Massepotentiales auf der CAN_H-Leitung zeigt sich vorteilhaft gegenüber einem Vergleich bei einem eingeschwungenen VCC-Potential auf der CAN_L-Leitung, daß mehr oder weniger undefinierte Spannungsverluste in Abhängigkeit von der Güte weiter verwendeter Bauteile keine Rolle spielen.

Bei der Ausgestaltung des Verfahrens nach Anspruch 4 entspricht das Potential im eingeschwungenen Zustand dem teilnehmerspezifischen Potential.

Auch hierbei spielen undefinierte Spannungsverluste in Abhängigkeit von der Güte weiterhin verwendeter Bauteile keine Rolle.

Bei dem Verfahren nach Anspruch 5 erfolgt der Vergleich mit einem gewissen zeitlichen Nachlauf, nachdem mittels der steuerbaren Schalter die Leitung auf ein bestimmtes Potential geschaltet ist.

Der zeitliche Nachlauf muß dabei einerseits so bemessen sein, daß der eingeschwungene Zustand erreicht ist und andererseits so bemessen sein, daß das Potential nicht bereits wieder zurückgeschaltet wurde.

Bei dem Verfahren nach Anspruch 6 erfolgt der Vergleich innerhalb eines Zeitfensters, nachdem der Schaltzustand der steuerbaren Schalter gewechselt hat.

Dabei wird vorteilhaft der zeitliche Verzug ausgenutzt, den die Bauteile aufweisen, bis der Schaltvorgang tatsächlich erfolgt. Bei einem Wechsel des Zustandes des Transceivers vergeht in der Größenordnung von 500ns bis der Schaltvorgang stattgefunden hat. Innerhalb dieses Zeitfensters erfolgt der Vergleich. Dadurch ist vorteilhaft sichergestellt, daß das Potential in einem eingeschwungenen Zustand ist. Außerdem ist sichergestellt, daß das richtige Potential vorliegt.

In der vorteilhaften Ausgestaltung nach den Ansprüchen 3 und 4 bedeutet dies, daß der Vergleich innerhalb des Zeitfensters erfolgt, während der Transceiver im Zustand "rezessiv" ist.

Bei dem Verfahren nach Anspruch 7 wird die von dem einzelnen Teilnehmer feststellbare Batteriespannung mit der von einem oder mehreren Referenzteilnehmern feststellbaren Batteriespannung verglichen, wobei bei einer Abweichung der festgestellten Batteriespannungen oberhalb eines bestimmten Schwellwertes auf eine fehlerhafte Massekontaktierung geschlossen wird.

Dieses Verfahren eignet sich zur Feststellung einer möglicherweise fehlerhaften Massekontaktierung unabhängig von der bisher dargestellten Überprüfung. Bei dem Verfahren nach Anspruch 7 wird die lokal festgestellte Batteriespannung beispielsweise als Information über den Bus zu einem weiteren Steuergerät gesandt, das als Referenz selbst die dort feststellbare Batteriespannung ermittelt. Ist der übersandte Wert der Batteriespannung geringer oder größer, kann auf einen Massefehler geschlossen werden.

Einschränkend ist dabei festzuhalten, daß ein Absinken der lokal festgestellten Batteriespannung auch an einer fehlerhaften Kontaktierung zum +-Anschluß liegen kann. Deswegen eignet sich diese Vorgehensweise gemäß Anspruch 8 besonders in Kombination mit den vorbeschriebenen Verfahren zur Verifikation der festgestellten Ergebnisse. Auch hier wird die lokal festgestellte Batteriespannung beispielsweise als Information über den Bus zu einem weiteren Steuergerät gesandt, das als Referenz selbst die dort feststellbare Batteriespannung ermittelt. Ist der übersandte Wert der Batteriespannung geringer oder größer, kann auf einen Massefehler geschlossen werden.

Bei dem Verfahren nach Anspruch 9 sind die Kontaktierungen des Referenzteilnehmers zu Verbesserung der Kontaktierung doppelt ausgeführt.

Dadurch kann vorteilhaft die Fehlerquelle minimiert werden, daß eine fehlerhafte Massekontaktierung des Teilnehmers, der als Referenz dienen soll, zu falschen Ergebnissen führt.

Bei dem Verfahren nach Anspruch 10 erfolgt in einem Kraftfahrzeug der Vergleich der Batteriespannung nur oberhalb eines bestimmten Drehzahlwertes.

Dadurch wird vorteilhaft vermieden, daß es zu fehlerhaften Beurteilungen kommt, weil das Bordnetz (und damit die meßbare Batteriespannung) aufgrund der niedrigen Drehzahl eine zu niedrige Spannung hat.

Bei dem Verfahren nach Anspruch 11 wird der Vergleich aktiviert, wenn in dem entsprechenden Teilnehmer ein bestimmter Mindestlaststrom fließt.

Dadurch ist sichergestellt, daß eine eventuell fehlerhafte Massekontaktierung auch eine entsprechende Potentialverschiebung bewirkt.

Bei dem Verfahren nach Anspruch 12 erfolgt bei einer erkannten Abweichung oberhalb des Schwellwertes betreffend den jeweiligen Teilnehmer ein Eintrag in einen Diagnosespeicher.

Dadurch können erkannte Fehler beispielsweise bei einer routinemäßigen Wartung ausgelesen werden. Zur Fehlerbehebung können die erkannten Fehler angezeigt werden.

Bei dem Verfahren nach Anspruch 13 werden bei einer erkannten Abweichung oberhalb des Schwellwertes betreffend den jeweiligen Teilnehmer die Eindraht-Empfangsschwellen entsprechend verschoben.

Dadurch kann auch bei einer fehlerhaften Massekontaktierung einzelner Teilnehmer noch eine Kommunikation durchgeführt werden.

Bei dem Verfahren nach Anspruch 14 werden bei einer erkannten Abweichung oberhalb des Schwellwertes von dem jeweiligen Teilnehmer nur dann Daten ausgesendet, wenn das Steuergerät Laststrom frei ist.

Durch diese Vorgehensweise können übermäßige Verschiebungen des Spannungspegels beim Senden der Daten aufgrund der fehlerhaften Massekontaktierung vermieden werden. Wenn ein Laststrom vorliegt, ist die Potentialverschiebung aufgrund der fehlerhaften Massekontaktierung nämlich besonders ausgeprägt

Bei dem Verfahren nach Anspruch 15 erfolgt eine Mehrfach-Abfrage der Masseversatz-Detektierung.

Dadurch ist sichergestellt, daß dynamische Störungen bzw. Überlagerungen zu keiner Fehlinterpretation führen können. So können beispielsweise durch dynamische Ereignisse verursachte Masseverschiebungen, bedingt durch z.B. den Blockierstrom eines Verstellmotors, gefiltert werden.

Anspruch 16 beschreibt eine erfindungsgemäße Ausbildung einer Vorrichtung zum Prüfen der Massekontaktierung von Teilnehmern eines vernetzten Systems, wobei die Vernetzung realisiert ist, indem über zwei Leitungen Daten gesendet und empfangen werden, wobei eine Leitung an jedem Teilnehmer über eine Widerstandsanordnung sowie eine Kontaktierung mit einem gemeinsamen Potential der Teilnehmer verbunden ist und über einen steuerbaren Schalter mit einem weiteren Potential verbindbar ist, wobei die andere Leitung an jedem Teilnehmer über eine Widerstandsanordnung mit einem teilnehmerspezifischen Potential der Teilnehmer verbunden ist und über einen steuerbaren Schalter sowie eine Kontaktierung mit einem gemeinsamen Potential verbindbar ist, wobei die über wenigstens einer Widerstandsanordnung abfallende Spannung dem einen Eingang jeweils eines Komparators zugeführt wird, dessen anderem Eingang ein Vergleichspotential zugeführt wird, wobei aus dem Ausgangssignal des Komparators auf den Zustand der Massekontaktierung des Teilnehmers geschlossen wird.

Dadurch ergibt sich ein vergleichsweise einfach darstellbarer Schaltungsaufbau, der auch in integrierter Form kostengünstig realisiert werden kann.

Bei der Vorrichtung nach Anspruch 17 werden die unterschiedlichen Potentiale, die den Eingängen der Komparatoren zugeführt werden, über einen Multiplexer aus einer Spannung generiert und den jeweiligen Eingängen der Komparatoren zugeführt.

Vorteilhaft zeigt sich dabei, daß die Schaltung mit einem geringen Hardwareaufwand herstellbar ist.

Ebenso gilt dies für die Schaltung nach Anspruch 18, bei der die zu messenden Spannungen über einen Multiplexer einer Auswerteeinheit zugeführt werden.

Ein Ausführungsbeispiel der Erfindung ist in der Zeichnung näher dargestellt. Es zeigt dabei im einzelnen:

Fig. 1: die Darstellung mehrerer vernetzter Teilnehmer,

Fig. 2: die Darstellung der Spannungsverhältnisse eines Teilnehmers, der einen Massefehler aufweist,

Fig. 3: ein erstes Ausführungsbeispiel einer Schaltung zur Erkennung des Massefehlers eines Teilnehmers,

Fig. 4: ein weiteres Ausführungsbeispiel einer Schaltung zur Erkennung des Massefehlers eines Teilnehmers,

Fig. 5: eine Darstellung der Zeitverhältnisse zur Festlegung des Zeitpunktes der Messung eines Massefehlers,

Fig. 6: ein weiteres Ausführungsbeispiel einer Schaltung zur Erkennung des Massefehlers eines Teilnehmers,

Fig. 7: die zeitlichen Zusammenhänge von TxD und dem Buspegel auf CAN_H und

Fig. 8: die Transceiver internen Spannungsverluste einer typischen CAN_H Treiberstufe.

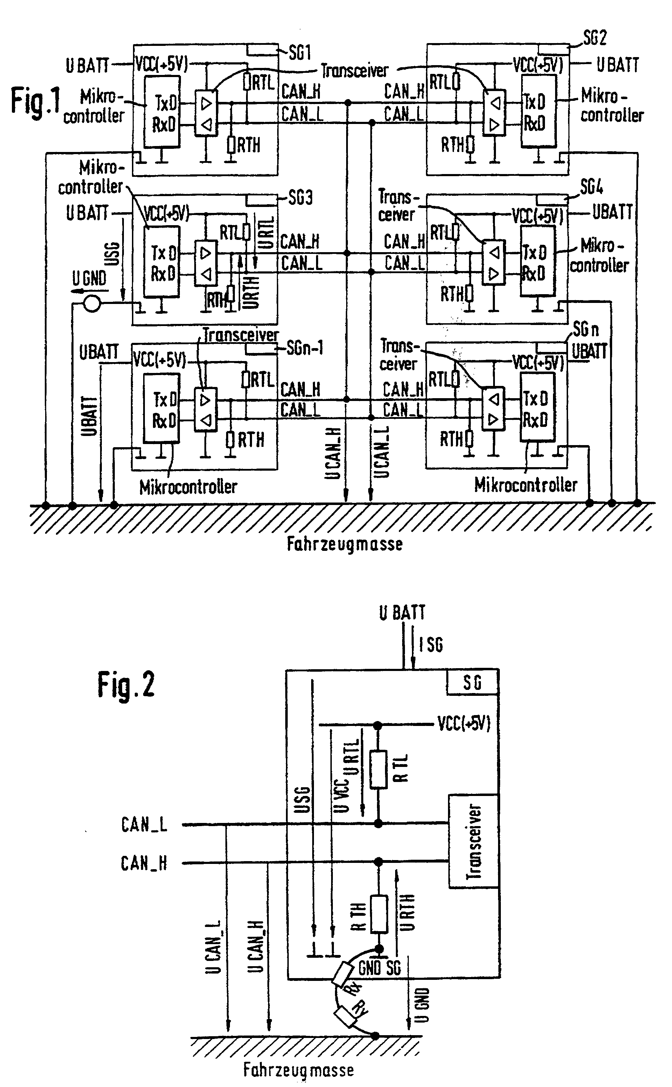

Figur 1 zeigt die Darstellung mehrerer vernetzter Teilnehmer. Die Teilnehmer werden dabei durch Steuergeräte gebildet, die einen Mikrocontroller aufweisen. Zu diesen Steuergeräten sind Kopplungsmittel (Transceiver) dargestellt, mittels denen die Teilnehmer an das Netz angekoppelt sind. Diese Transceiver können vorteilhaft als integrierte Schaltkreise ausgebildet sein. Derart vernetzte Teilnehmer können beispielsweise mehrere Steuergeräte in einem Kraftfahrzeug sein, die untereinander Daten austauschen müssen.

In Fig. 1 ist dargestellt, daß die Kommunikation über einen Datenbus erfolgt, der aus zwei Leitungen besteht (CAN_H und CAN_L). Aufgrund der Systemkonfiguration werden bei dieser Kommunikation über zwei Leitungen Massefehler einzelner Teilnehmer toleriert, die eine Potentialverschiebung bis zu 4 Volt bewirken.

Wenn beispielsweise aufgrund eines Kurzschlusses einer dieser Leitungen nach Masse eine Kommunikation nur noch über eine Leitung möglich ist, können - ebenfalls systemspezifisch bedingt - nur noch Potentialdifferenzen bis zu 1,25 Volt toleriert werden. Es kann also vorkommen, daß einzelne Teilnehmer, die bei der Kommunikation über zwei Leitungen ohne Probleme funktionieren, dann plötzlich nicht mehr an der Kommunikation teilnehmen können. Es ist daher erwünscht, solche Massefehler möglichst frühzeitig zu erkennen.

Wie aus Figur 1 zu entnehmen ist, wird CAN_H über spezifische Terminierungswiderstände RTH in jedem Teilnehmer an die dort vorhandenen Massen angeschlossen. CAN_L wird über spezifische Terminierungswiderstände RTL in jedem Teilnehmer an die dort vorhandene VCC Spannung (+5V) angeschlossen.

Dies bedeutet, daß die Spannung auf CAN_H und CAN_L einen gemittelten Wert der jeweiligen Massen bzw. VCC Spannungen der einzelnen Teilnehmer darstellt. Eventuelle Abweichungen dieser Spannungen einzelner Teilnehmer beeinflussen die Spannung auf der Datenleitung nur geringfügig. Dadurch treten im Fall einer lokalen Abweichung des Potentials durch eine fehlerhafte Massekontaktierung auf CAN_H bzw. CAN_L messbare Spannungen auf, die von den erwarteten Werten abweichen.

Weiterhin kann die lokale Versorgungsspannung der Teilnehmer USG von dem einzelnen Teilnehmer selbst gemessen werden. Der einzelne Teilnehmer mißt dabei die Versorgungsspannung USG gegenüber seinem eigenen Masseanschluß U GND. Bei einem fehlerhaften Masseanschluß wird also die von dem einzelnen Teilnehmer meßbare Versorgunsspannung USG entsprechend geringer. Dieser Wert der Versorgungsspannung USG kann über den Datenbus übertragen werden und mit anderen festgestellten Versorgungsspannungen USG verglichen werden. Aus einer Abweichung kann auf eine fehlerhafte Kontaktierung geschlossen werden, wobei die Massekontaktierang und/ oder die UBATT-Kontaktierung fehlerhaft sein kann.

Es zeigt sich, daß unter Beachtung dieser Verhältnisse auf den Masseversatz einzelner Teilnehmer geschlossen werden kann.

Dies zeigt sich anhand Figur 2, in der die Spannungsverhältnisse eines Teilnehmers dargestellt sind, der einen Masseversatz aufweist. Dieser Masseversatz des Teilnehmers (d.h. eine Potentialverschiebung zwischen GND SG gegenüber der Fahrzeugmasse) kann darauf beruhen, daß eine schlechte Massekontaktierung am Steuergerät (Rx) und/oder zur Karosseriemasse (Ry) vorliegt. Es gelten dann folgende Gleichungen:

$$USG = U\,BATT - U\,GND$$

$$U\,GND = I\,SG * (Rx + Ry)$$

$$URTL = U\,VCC - U\,CAN\_L$$

$$URTH = U\,GND - U\,CAN\_H$$

Wenn kein Massefehler vorliegt, ergibt sich somit:

$$GND\,SG = CAN\_H = Fahrzeugmasse$$
$$VCC = CAN\_L$$
$$USG = U\,BATT$$

Daraus ergibt sich URTH = 0 Volt und URTL = 0 Volt.

Bei den genannten Beziehungen sind noch die relevanten Toleranzen (RTH, RTL, VCC u.s.w.) zu beachten.

Unter Beachtung aller Toleranzen sind - abgestellt auf das Erfordernis einer auch bei einer Eindraht-Datenübertragung noch funktionsfähigen Kommunikation (siehe die oben angegebenen maximal zulässigen Potentialabweichungen) - die nachfolgenden Grenzwerie definierbar:

$$URTH < 1\,Volt$$
$$URTL < 1\,Volt$$
$$USG > (U\,BATT - 2\,Volt)$$

Dabei wird die Ermittlung des lokalen Massefehlers im Bus-Idle mode bzw. im rezessiven Buszustand durchgeführt. Dabei ist zu beachten, daß der maximale Steuergeräte-Betriebsstrom I SGmax fließt, da sich dann aufgrund eines Massefehlers die größte Potentialverschiebung einstellt:

$$U\,GND=ISG*(Rx+Ry)$$

Die Messung des Massefehlers wird also sinnvollerweise mit der steuergerätespezifischen Applikation gekoppelt (beispielsweise, wenn der Fensterhebermotor aktiv ist).

Werden an RTH bzw. RTL Spannungsdifferenzen festgestellt, die beispielsweise größer als 800mV sind, kann zusätzlich noch (zur Verifizierung) die Spannung U SG berücksichtigt werden.

Wenn ein Massefehler erkannt wurde, können verschiedene sinnvolle Maßnahmen getroffen werden. Beispielsweise können die Receiver Eindraht-Empfangsschwellen manipuliert werden, der erkannte Fehler kann in einen Diagnosespeicher geschrieben werden, der beispielsweise bei einer routinemäßigen Wartung des Fahrzeuges ausgelesen werden kann oder es kann eine Kommunikation (Senden) nur noch dann vorgenommen werden, wenn das Steuergerät frei von einem Laststrom ist (Notlaufbetrieb). In diesem Fall tritt nämlich keine bzw. nur eine geringe Potentialverschiebung auf.

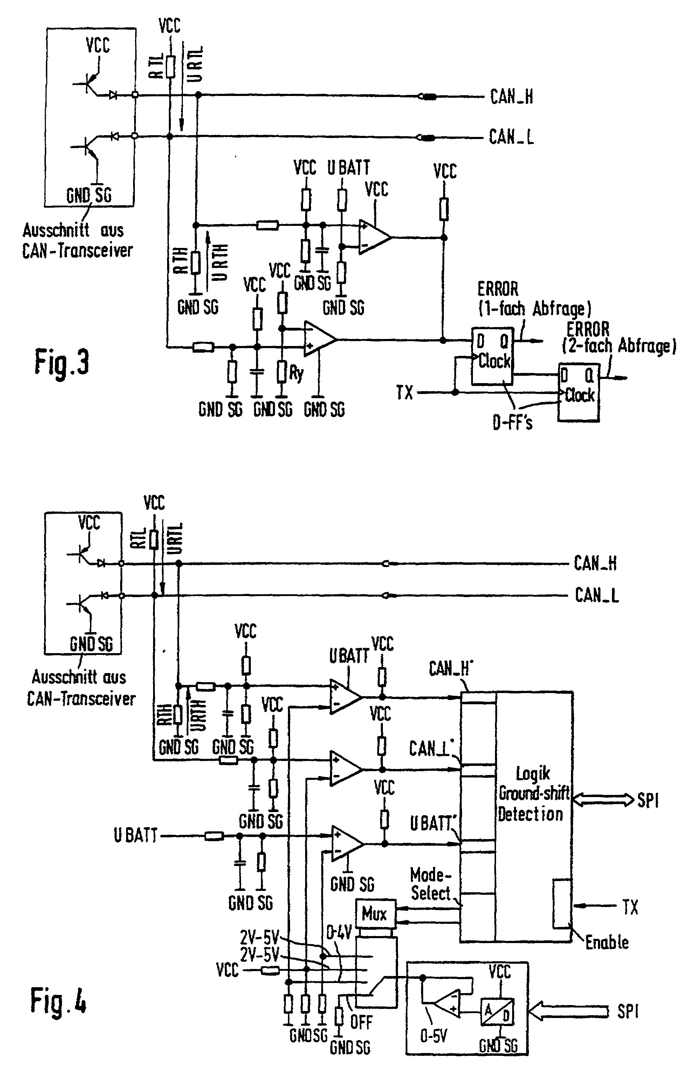

Figur 3 zeigt ein erstes Ausführungsbeispiel einer Schaltung zur Erkennung eines Massefehlers. Dabei werden die Spannungen URTH und URTL jeweils einem Eingang eines Komparators zugeführt. Dem anderen Eingang dieses Komparators wird dabei jeweils eine Spannung zugeführt, die aus der Spannung VCC gegenüber dem Massepotential (GND-SG) abgeleitet wird. Über einen Triggerbaustein erfolgt die Messung dann, wenn sich der Bus im eingeschwungenen recessiv-Zustand befindet. Dies kann abgeleitet werden, wenn nach dem Übergang in den recessiv-Zustand eine Zeit vergangen ist. Diese Zeit muß so gewählt werden, daß der Einschwingvorgang vorüber ist und weiterhin muß sichergestellt sein, daß noch nicht in den dominant-Zustand zurückgeschaltet wurde. Die Masseversatzmessung kann durch nachgeschaltete Flip-Flop's x-fach verifiziert werden, bevor es zu einer ERROR-Aktivierung kommt.

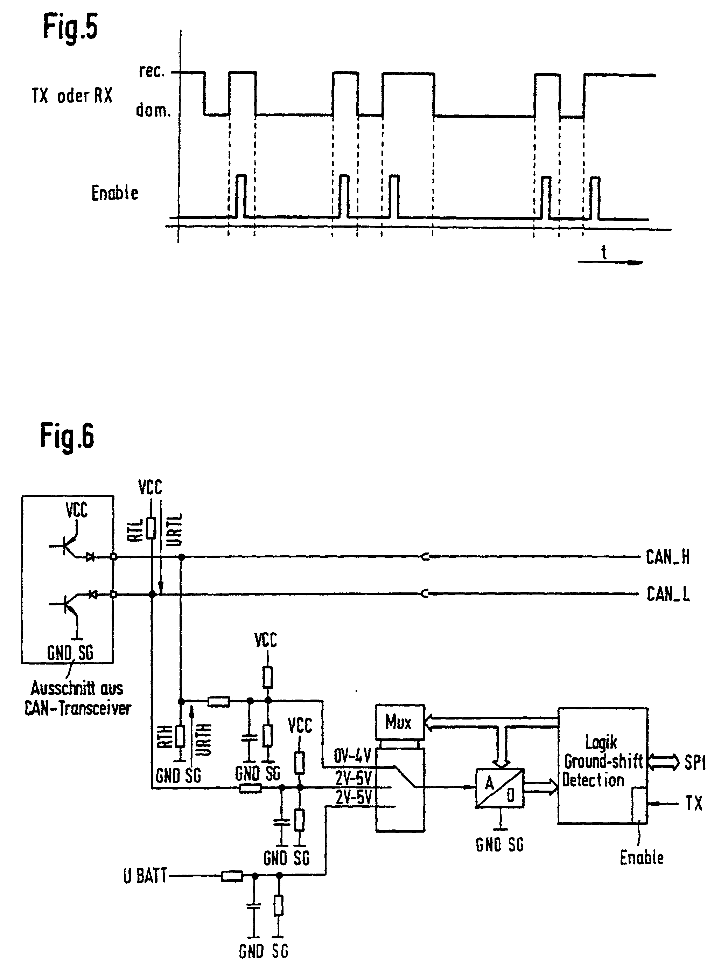

Figur 4 zeigt ein weiteres Ausführungsbeispiel einer Schaltung zur Erkennung eines Massefehlers, bei der gegenüber der Schaltung nach Figur 3 zusätzlich noch die Batteriespannung U BATT berücksichtigt wird. Weiterhin werden die Bezugspotentiale mittels eines einzigen D/A-Wandlers über einen Multiplexer Mux generiert und den jeweiligen Eingängen der Komparatoren zugeführt.

Figur 5 zeigt ein Ausführungsbeispiel einer Darstellung der Zeitverhältnisse zur Festlegung des Zeitpunktes der Messung des Massefehlers. Im oberen Teil dieser Darstellung ist der Zustand des Busses (recessiv oder dominant) zu sehen. Im unteren Teil der Darstellung ist zu sehen, wann in Abhängigkeit von dem Buszustand eine Messung erfolgen soll (Enable).

Figur 6 zeigt ein weiteres Ausführungsbeispiel einer Schaltung zur Erkennung eines Massefehlers, die sich in besonders einfacher Weise zur Integration in einen System-Basis-Chip eignet. Dabei werden die zu messenden Größen URTH, URTL, U BATT über einen Multiplexer Mux einem einzigen A/D-Wandler zugeführt, über den die auszuwertenden Spannungen einem Logik-Baustein (Logik Ground-shift Detection) zugeführt werden. Diesem Baustein wird weiterhin ein Signal (Enable) zugeführt, das den Buszustand darstellt, so daß die Messung und Auswertung zum richtigen Zeitpunkt erfolgt.

Dadurch ist es in einfacher Weise möglich, mit geringem Hardware-Aufwand die Messung durchzuführen.

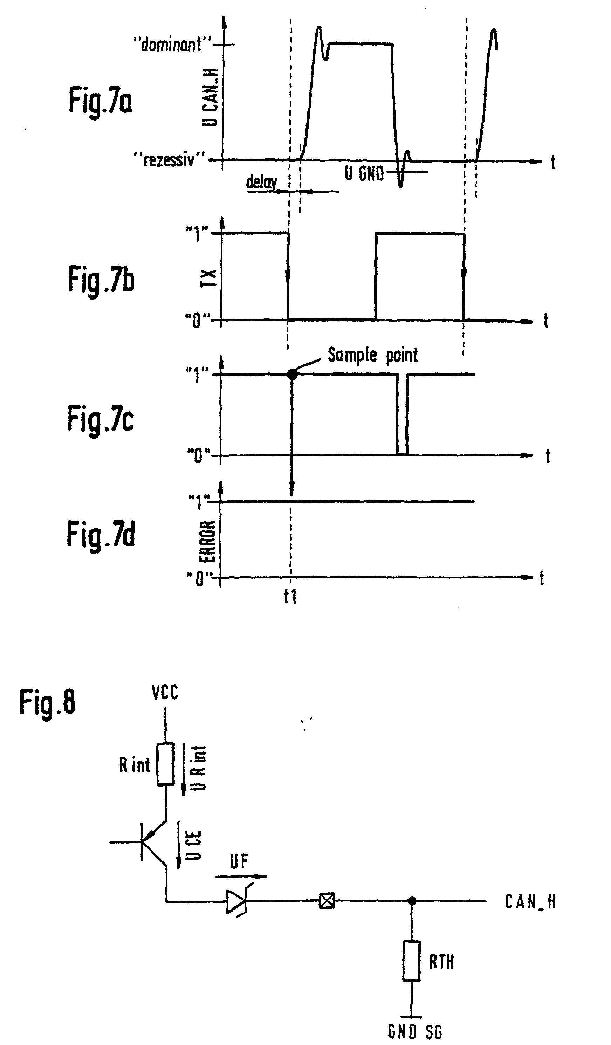

Eine andere Methode zur Festlegung des Zeitpunktes der Messung soll anhand von Figur 7 erläutert werden.

Das Diagramm 7a zeigt die Spannung U CAN_H bei einem Wechsel von dem rezessiven in den dominanten Zustand und bei einem Wechsel von dem dominanten Zustand in den rezessiven Zustand. Wie der Darstellung der Figur 7a zu entnehmen, ist der Zeitverlauf der Spannung U CAN_H so, daß bei einem Wechsel von TX (siehe Figur 7b) von "1" nach "0" und umgekehrt das Signal ein überschwingendes Verhalten zeigt. Beim Wechsel von "dominant" nach rezessiv wird dabei die Spannung U CAN_H kleiner als die Spannung U GND. Wie dem Diagramm der Figur 7a weiterhin zu entnehmen ist, ändert sich die Spannung U CAN_H erst mit einer gewissen zeitlichen Verzögerung nach einer Änderung von TX. Diese zeitliche Verzögerung liegt dabei in der Größenordnung von ca. 500ns. Wie in der Darstellung des zeitlichen Verlaufes des Komparatorausganges im Diagramm der Figur 7c zu entnehmen ist, ändert sich der Ausgang des Komparators aufgrund des überschwingenden Verhaltens beim Übergang von TX "1" nach "0". Dies hat aber nichts mit einer schlechten Massekontaktierung zu tun. Deswegen soll dieser Änderung des Komparatorausganges nicht als Fehler gewertet werden.

Wie der Darstellung der Figur 7 zu entnehmen ist, erfolgt die Messung und der Vergleich der Spannungen zum Zeitpunkt t1. Dieser Zeitpunkt liegt innerhalb eines Zeitfensters nach dem Wechsel von TX von "1" nach "0". Zu diesem Zeitpunkt hat sich die Spannung auf der CAN_H-Leitung noch nicht geändert. Weiterhin ist sichergestellt, daß zu diesem Zeitpunkt (unmittelbar vor dem Übergang in den dominant-Zustand) der rezessiv-Zustand eingeschwungen ist.

Vorteilhaft erfolgt also die Messung und der Vergleich der Spannungen zu diesem Zeitpunkt t1. Dadurch ist auch sichergestellt, daß Änderungen des Komparatorausganges, die beispielsweise aufgrund des überschwingenden Verhaltens der Spannung auf der CAN_H-Leitung vorkommen, nicht zu Fehlinterpretationen führen.

Figur 7d zeigt die logische Variable, die ggf. einen Massefehler darstellt Diese Variable wird zum Zeitpunkt tl aktualisiert. Da zu diesem Zeitpunkt der Fehlerfall nicht vorlag, wird kein Fehlerfall erkannt.

Im Zusammenhang mit der Figur 7 sind die Verhältnisse nur anhand der CAN_H-Leitung erörtert worden. Da die Verhältnisse auf der CAN_L-Leitung nur zu einem redundanten Ergebnis führen, ist es hinreichend, eine Messung und einen Vergleich nur anhand einer dieser beiden Leitungen vorzunehmen. Die Verwendung der CAN_H-Leitung zu diesem Zweck hat den Vorteil, daß dort im rezessiven Zustand unmittelbar das Massepotential anliegt.

Die Messung im rezessiven Buszustand gegenüber dem dominanten Buszustand hat weiterhin den Vorteil, daß der Spannungspegel auf dem Datenbus weitgehend unabhängig von der Qualität irgendwelcher Bauteile ist. Figur 8 zeigt beispielhaft an der CAN_H-Leitung, wie die Spannungsverhältnisse im dominanten Zustand liegen. Die Spannung auf der CAN_H-Leitung wird dabei bestimmt über VCC, wobei folgende Spannungen zu berücksichtigen sind:

- U Rint: Spannungsabfall an einem Widerstand
- U CE: Spannung vom Kollektor zum Emitter des Schalttransistors
- U F: Flußspannung einer Schottkeydiode.

Aufgrund der vorgegebenen Toleranzen kann die Summe dieser Spannungen bis zu 1,4 Volt betragen. Da die Bauteile hinsichtlich ihrer Qualität und ihrer Toleranzen nicht genau festgelegt sind, kann es hierdurch bedingt zu Abweichungen der Spannungen kommen. Diese Abweichungen der Spannungen würden bei einer Messung im dominanten Buszustand mit eingehen. Bei der Messung im rezessiven Buszustand sperrt hingegen der Transistor, so daß die Bauteile hinsichtlich ihrer Toleranzen keine Rolle mehr spielen.

**Patentansprüche**

1. Verfahren zum Prüfen der Massekontaktierung von Teilnehmern (SG1, SG2, ..., SGn) eines vernetzten Systems, wobei über wenigstens eine Leitung (CAN_H, CAN_L) Daten gesendet und empfangen werden, wobei wenigstens eine Leitung (CAN_H) an jedem Teilnehmer (SG1, SG2, ..., SGn) über eine Widerstandsanordnung (RTH) sowie eine Kontaktierung mit einem gemeinsamen Potential (GND) der Teilnehmer (SG1, SG2, ..., SGn) verbunden ist und über einen steuerbaren Schalter (Transceiver) mit einem weiteren Potential (VCC) verbindbar ist, wobei die Spannung (URTH) über der Widerstandsanordnung (RTH) mit einem vorgegebenen Potential verglichen wird, wenn die Leitung (CAN_H) ein Potential in einem eingeschwungenen Zustand aufweist, wobei aus einem Vergleich der Spannung (URTH) über der Widerstandsanordnung (RTH) mit dem vorgegebenen Potential auf den Zustand der Massekontaktierung des Teilnehmers (SG1, SG2, ..., SGn) geschlossen wird.

2. Verfahren zum Prüfen der Massekontaktierung von Teilnehmern (SG1, SG2, ..., SGn) eines vernetzten Systems, wobei über wenigstens eine Leitung (CAN_H, CAN_L) Daten gesendet und empfangen werden, wobei wenigstens eine Leitung (CAN_L) an jedem Teilnehmer (SG1, SG2, ..., SGn) über eine Widerstandsanordnung (RTL) mit einem teilnehmerspezifischen Potential (VCC) der Teilnehmer (SG1, SG2, ..., SGn) verbunden ist und über einen steuerbaren Schalter (Transceiver) sowie eine Kontaktierung mit einem gemeinsamen Potential (GND) verbindbar ist, wobei die Spannung (URTL) über der Widerstandsanordnung (RTL) mit einem vorgegebenen Potential verglichen wird, wenn die Leitung (CAN_L) ein Potential in einem eingeschwungenen Zustand aufweist, wobei aus einem Vergleich der Spannung (URTL) über der Widerstandsanordnung (RTL) mit dem vorgegebenen Potential auf den Zustand der Massekontaktierung des Teilnehmers (SG1, SG2, ..., SGn) geschlossen wird.

3. Verfahren nach Anspruch 1,

dadurch gekennzeichnet, daß das Potential im eingeschwungenen Zustand das gemeinsame Potential (GND) ist.

4. Verfahren nach Anspruch 2,
dadurch gekennzeichnet, daß das Potential im eingeschwungenen Zustand dem teilnehmerspezifischen Potential (VCC) entspricht

5. Verfahren nach einem der Ansprüche 1 bis 4,
dadurch gekennzeichnet, daß der Vergleich mit einem gewissen zeitlichen Nachlauf erfolgt, nachdem mittels der steuerbaren Schalter (CAN-Transceiver) die Leitung (CAN_H, CAN_L) auf ein bestimmtes Potential geschaltet ist.

6. Verfahren nach einem der Ansprüche 1 bis 4,
dadurch gekennzeichnet, daß der Vergleich innerhalb eines Zeitfensters erfolgt, nachdem der Schaltzustand der steuerbaren Schalter (Transceiver) gewechselt hat.

7. Verfahren zum Prüfen der Massekontaktierung von Teilnehmern (SG1, SG2, ..., SGn) eines vernetzten Systems,
dadurch gekennzeichnet, daß die von dem einzelnen Teilnehmer (SG1, SG2, ..., SGn) feststellbare Batteriespannung (USG) mit der von einem oder mehreren Referenzteilnehmern (SG1, SG2, ..., SGn) feststellbaren Batteriespannung (USG) verglichen wird, wobei bei einer Abweichung der festgestellten Batteriespannungen (USG) oberhalb eines bestimmten Schwellwertes auf eine fehlerhafte Massekontaktierung geschlossen wird.

8. Verfahren nach einem der Ansprüche 1 bis 7,
dadurch gekennzeichnet, daß die von dem einzelnen Teilnehmer (SG1, SG2, ..., SGn) feststellbare Batteriespannung (USG) mit der von einem oder mehreren Referenzteilnehmern (SG1, SG2, ..., SGn) feststellbaren Batteriespannung (USG) verglichen wird, wobei bei einer Abweichung der festgestellten Batteriespannungen (USG) oberhalb eines bestimmten Schwellwertes auf eine fehlerhafte Massekontaktierung geschlossen wird.

9. Verfahren nach Anspruch 7 oder 8,
dadurch gekennzeichnet, daß die Kontaktierungen des Referenzteilnehmers (SG1, SG2, ..., SGn) doppelt ausgeführt sind.

10. Verfahren nach einem der Ansprüche 7 bis 9,
dadurch gekennzeichnet, daß in einem Kraftfahrzeug der Vergleich der Batteriespannung nur oberhalb eines bestimmten Drehzahlwertes erfolgt

11. Verfahren nach einem der Ansprüche 1 bis 10,
dadurch gekennzeichnet, daß der Vergleich aktiviert wird, wenn in dem entsprechenden Teilnehmer (SG1, SG2, ..., SGn) ein bestimmter Mindestlaststrom (I SG) fließt.

**12.** Verfahren nach einem der Ansprüche 1 bis 11, **dadurch gekennzeichnet, daß** bei einer erkannten Abweichung oberhalb des Schwellwertes betreffend den jeweiligen Teilnehmer (SG1, SG2, ..., SGn) ein Eintrag in einem Diagnosespeicher erfolgt.

**13.** Verfahren nach einem der Ansprüche 1 bis 12, **dadurch gekennzeichnet, daß** bei einer erkannten Abweichung oberhalb des Schwellwertes betreffend den jeweiligen Teilnehmer (SG1, SG2, ..., SGn) die Bindraht-Empfangsschwellen entsprechend verschoben werden.

**14.** Verfahren nach einem der Ansprüche 1 bis 13, **dadurch gekennzeichnet, daß** bei einer erkannten Abweichung oberhalb des Schwellwertes von dem jeweiligen Teilnehmer (SG1, SG2, ..., SGn) nur dann Daten ausgesendet werden, wenn das Steuergerät (SG1, SG2, ..., SGn) Laststrom-frei ist.

**15.** Verfahren nach einem der Ansprüche 1 bis 14, **dadurch gekennzeichnet, daß** eine mehrfache Masseversatz-Fehlerabfrage erfolgt bevor eine Fehleranzeige (ERROR) vorgenommen wird.

**16.** Vorrichtung zum Prüfen der Massekontaktierung von Teilnehmern (SG1, SG2, ..., SGn) eines vernetzten Systems, wobei die Vernetzung realisiert ist, indem über zwei Leitungen (CAN_H, CAN_L) Daten gesendet und empfangen werden, wobei eine Leitung (CAN_H) an jedem Teilnehmer (SG1, SG2, ..., SGn) über eine Widerstandsanordnung (RTH) sowie eine Kontaktierung mit einem gemeinsamen Potential (GND) der Teilnehmer (SG1, SG2, ..., SGn) verbunden ist und über einen steuerbaren Schalter (Transceiver) mit einem weiteren Potential (VCC) verbindbar ist, wobei die andere Leitung (CAN_L) an jedem Teilnehmer (SG1, SG2, ..., SGn) über eine Widerstandsanordnung (RTL) mit einem teilnehmerspezifischen Potential (VCC) der Teilnehmer (SG1, SG2, ..., SGn) verbunden ist und über einen steuerbaren Schalter (Transceiver) sowie eine Kontaktierung mit einem gemeinsamen Potential (GND) verbindbar ist, wobei die über wenigstens einer Widerstandsanordnung (RTH, RTL) abfallende Spannung dem einen Eingang jeweils eines Komparators zugeführt wird, dessen anderem Eingang ein Vergleichspotential zugeführt wird, wobei aus dem Ausgangssignal des Komparators auf den Zustand der Massekontaktierung des Teilnehmers (SG1, SG2, ..., SGn) geschlossen wird.

**17.** Vorrichtung nach Anspruch 16, **dadurch gekennzeichnet, daß** die unterschiedlichen Potentiale (Bezugspotentiale), die den Eingängen der Komparatoren zugeführt werden, über einen Multiplexer (Mux) aus einer Spannung generiert und den jeweiligen Eingängen der Komparatoren zugeführt werden.

**18.** Vorrichtung nach Anspruch 16 oder 17, **dadurch gekennzeichnet, daß** die zu messenden Spannungen (URTH, URTL, U Batt) über einen Multiplexer (Mux) einer Auswerteeinheit zugeführt werden.

**Claims**

**1.** A method of testing the earthing contact of subscribers (SG1, SG2 ..., SGn) of a cross-linked system whereby data are sent and received over at least one line (CAN_H, CAN_L) whereby at least one line (CAN_H) is connected to each subscriber (SG1, SG2, ..., SGn) via a resistance arrangement (RTH) and a contact with a common potential (GND) of the subscribers (SG1, SG2, ..., SGn) and can be connected via a controllable switch (transceiver) to a further potential (VCC), whereby the voltage (URTH) is via the resistance arrangement (RTH) compared with a given potential if the line (CAN_H) has a potential in a steady-state condition whereby, from a comparison of the voltage (URTH) via the resistance arrangement (RTH) with the given potential it is possible to arrive at a conclusion concerning the state of the earth contact of the subscriber (SG1, SG2, ..., SGn).

**2.** A method of testing the earthing contact of subscribers (SG1, SG2, ..., SGn) of a cross-linked system whereby via at least one line (CAN_H, CAN_L) data are sent and received, whereby at least one line (CAN_L) is connected to each subscriber (SG1, SG2, ..., SGn) via a resistance arrangement (RTL) with a subscriber-specific potential (VCC) of subscribers (SG1, SG2, ..., SGn) and can be connected to a common potential GND) via a controllable switch (transceiver) and a contact, whereby the voltage (URTL) is via the resistance arrangement (RTL) compared with a given potential if the line (CAN_L) has a potential in a steady-state condition whereby, from a comparison of the voltage (URTL) via the resistance arrangement (RTL) with the given potential it is possible to draw a conclusion concerning the condition of the earth contact of the subscriber (SG1, SG2, ..., SGn).

**3.** A method according to claim 1, **characterised in that** the potential in the steady-state condition is the common potential (GND).

**4.** A method according to claim 2, **characterised in that** the potential in the steady-state condition corresponds to the subscriber specific potential (VCC).

**5.** A method according to one of claims 1 to 4, **characterised in that** the comparison takes place after a certain time lapse once the line (CAN_H, CAN_L) has been switched to a specific potential by means of the controllable switch (CAN-transceiver).

**6.** A method according to one of claims 1 to 4, **characterised in that** the comparison takes place within a time window once the connected state of the controllable switch (transceiver) has changed.

**7.** A method of testing the earthing contact of subscribers (SG1, SG2, ..., SGn) of a cross-linked system, **characterised in that** the battery voltage (USG) which can be established in respect of the individual subscriber (SG1 SG2, ..., SGn) is compared with the battery voltages (USG) which can be established in respect of one or more reference subscribers (SG1, SG2, ..., SGn), whereby in the event of a deviation of the established battery voltages (USG) above a specific threshold value, it is concluded that the earthing contact is faulty.

**8.** A method according to one of claims 1 to 7, **characterised in that** the battery voltage (USG) which can be established in respect of the individual subscriber (SG1, SG2, ..., SGn) is compared with the battery voltage (USG) which can be established in respect of one or more reference subscribers (SG1, SG2, ..., SGn) whereby in the event of a deviation in the established battery voltages (USG) above a specific threshold value, it is concluded that the earthing contact is faulty.

**9.** A method according to claim 7 or 8, **characterised in that** the contacts of the reference subscriber (SG1, SG2, ..., SGn) are doubled.

**10.** A method according to one of claims 7 to 9, **characterised in that** in a motor vehicle the comparison of the battery voltage takes place only above a specific rotary speed.

**11.** A method according to one of claims 1 to 10, **characterised in that** the comparison is activated when a specific minimum load current (ISG) is flowing in the corresponding subscriber (SG1, SG2, ..., SGn).

**12.** A method according to one of claims 1 to 11, **characterised in that** in the case of an acknowledged deviation above the threshold value in respect of the particular subscriber (SG1, SG2, ..., SGn) an entry is made into a diagnostic memory.

**13.** A method according to one of claims 1 to 12, **characterised in that** in the event of an acknowledged deviation above the threshold value in respect of the particular subscriber (SG1, SG2, ..., SGn) the single wire receiving thresholds are correspondingly displaced.

**14.** A method according to one of claims 1 to 13, **characterised in that** in the event of an acknowledged deviation above the threshold value in respect of the particular subscriber (SG1, SG2, ..., SGn), data are sent out only when the control device (SG1, SG2, ..., SGn) is load current-free.

**15.** A method according to one of claims 1 to 14, **characterised in that** a multiple earthing shift fault enquiry takes place before a fault (ERROR) is indicated.

**16.** An apparatus for testing the earthing contact of subscribers (SG1, SG2, ..., SGn) of a cross-linked system, whereby the cross-linking is performed in that data are sent and received over two lines (CAN_H, CAN_L), whereby one line (CAN_H) is connected to each subscriber (SG1, SG2, ..., SGn) via a resistance arrangement (RTH) and a contact with a common potential (GND) of the subscribers SG1, SG2, ..., SGn) and can be connected via a controllable switch (transceiver) to a further potential (VCC), whereby the other line (CAN-L) is connected to each subscriber (SG1, SG2, ..., SGn) via a resistance arrangement (RTL) with a subscriber-specific potential (VCC) of the subscribers (SG1, SG2, ..., SGn) and can be connected via a controllable switch (transceiver) and contact with a common potential (GND) whereby the voltage dropping over at least one resistance arrangement (RTH, RTL) is fed to one input of in each case a comparator while a comparative potential is fed to its other input, whereby from the output signal of the comparator it is possible to arrive at a conclusion regarding the condition of the earthing contact of the subscriber (SG1, SG2, ..., SGn).

**17.** An apparatus according to claim 16, **characterised in that** the various potentials (reference potentials) which are fed to the inputs of the comparators are generated via a multiplexer (Mux) from one voltage and are fed to the respective inputs of the comparators.

**18.** An apparatus according to claim 16 or 17, **characterised in that** the voltages (URTH, URTL, U Batt) to be measured are fed through a multiplexer (Mux) to an evaluating unit.

## Revendications

1. Procédé de contrôle du contact de masse d'abonnés/participants (SG1, SG2, ..., SGn), d'un système en réseau, des données étant envoyées et reçues par l'intermédiaire d'au moins une ligne (CAN_H, CAN_L), au moins une ligne (CAN_H), existant à chaque abonné (SG1, SG2, ..., SGn), étant reliée, par l'intermédiaire d'un agencement résistif (RTH) ainsi que par une mise en contact, à un potentiel commun (GND) des abonnés (SG1, SG2, ..., SGn), et est susceptible d'être reliée à un autre potentiel (VCC), par l'intermédiaire d'un interrupteur pouvant être commandé (transceiver), la tension (URTH) étant comparée à un potentiel prédéterminé, par l'intermédiaire de l'agencement résistif (RTH), lorsque la ligne (CAN_H) présente un potentiel dans un état transitoire, des conclusions étant tirées, concernant l'état du contact de. masse de l'abonné (SG1, SG2, ..., SGn), à partir d'une comparaison entre la tension (URTH), sur l'agencement résistif (RTH), et le potentiel prédéterminé.

2. Procédé de contrôle du contact de masse d'abonnés/participants (SG1, SG2, ..., SGn), d'un système en réseau, des données étant envoyées et reçues par l'intermédiaire d'au moins une ligne (CAN_H, CAN_L), au moins une ligne (CAN_L), existant à chaque abonné (SG1, SG2, ..., SGn), étant reliée, par l'intermédiaire d'un agencement résistif (RTL), à un potentiel (VCC), spécifique à l'abonné, des abonnés (SG1, SG2, ..., SGn) et est susceptible d'être reliée à un potentiel commun (GND), par l'intermédiaire d'un interrupteur pouvant être commandé (transceiver) ainsi qu'une mise en contact, la tension (URTL) à l'agencement résistif (RTL) étant comparée à un potentiel prédéterminé, lorsque la ligne (CAN_L) présente un potentiel en un état transitoire, des conclusions étant tirées, concernant l'état du contact de masse de l'abonné (SG1, SG2, ..., SGn), à partir d'une comparaison entre la tension (URTL) à l'agencement résistif (RTL) et le potentiel prédéterminé.

3. Procédé selon la revendication 1, **caractérisé en ce que** le potentiel à l'état transitoire est le potentiel commun (GND).

4. Procédé selon la revendication 2, **caractérisé en ce que** le potentiel à l'état transitoire correspond au potentiel (VCC) spécifique à l'abonné.

5. Procédé selon l'une des revendications 1 à 4, **caractérisé en ce que** la comparaison s'effectue avec un certain retard temporel, après que, au moyen de l'interrupteur pouvant être commandé (transceiver-CAN), la ligne (CAN_H, CAN_L) ait été branchée à un potentiel déterminé.

6. Procédé selon l'une des revendications 1 à 4, **caractérisé en ce que** la comparaison est effectuée dans les limites d'une fenêtre de temps, après que l'état de commutation de l'interrupteur pouvant être commandé (transceiver), ait été changé.

7. Procédé de contrôle du contact de masse d'abonnés/participants (SG1, SG2, ..., SGn) d'un système en réseau,
**caractérisé en ce que** la tension de batterie (USG), pouvant être constatée par les différents abonnés (SG1, SG2, ..., SGn), est comparée à la tension de batterie (USG) pouvant être constatée par un ou plusieurs abonnés de référence (SG1, SG2, ..., SGn), sachant que, dans le cas où l'écart entre les tensions de batterie (USG) constatées est supérieur à une valeur-seuil déterminée, on conclue à un défaut du contact de masse.

8. Procédé selon l'une des revendications 1 à 7, **caractérisé en ce que** la tension de batterie (USG) pouvant être constatée par les différents abonnés (SG1, SG2, ..., SGn) est comparé à la tension de batterie (USG) pouvant être constatée par le un ou plusieurs abonnés de référence (SG1, SG2, ..., SGn), sachant que, dans le cas où l'écart entre les tensions de batterie (USG) constaté est supérieur à une valeur-seuil déterminée, on conclue à un défaut du contact de masse.

9. Procédé selon la revendication 7 ou 8, **caractérisé en ce que** les processus de mise en contact de l'abonné de référence (SG1, SG2, ..., SGn), sont effectués à deux reprises.

10. Procédé selon l'une des revendications 7 à 9, **caractérisé en ce que**, dans un véhicule, la comparaison de la tension de batterie ne s'effectue qu'au-dessus d'une valeur de vitesse de rotation déterminée.

11. Procédé selon l'une des revendications 1 à 10, **caractérisé en ce que** la comparaison est activée lorsqu'un courant de charge minimale ISG, déterminé, passe dans l'abonné (SG1, SG2, ..., SGn) correspondant.

12. Procédé selon l'une des revendications 1 à 11, **caractérisé en ce que**, dans le cas d'un écart identifié est supérieur à la valeur-seuil concernant l'abonné (SG1, SG2, ..., SGn) respectif, un enregistrement est effectué dans une mémoire de diagnostique.

13. Procédé selon l'une des revendications 1 à 12, **caractérisé en ce que**, en cas d'écart identifié supérieur à la valeur-seuil concernant l'abonné (SG1, SG2, ..., SGn) respectif, les seuils de réception en mode monofilaire sont décalés de manière correspondante.

**14.** Procédé selon l'une des revendications 1 à 13, **caractérisé en ce que**, en cas d'écart identifié, supérieur à la valeur seuil, de l'abonné (SG1, SG2, ..., SGn) respectif, ne sont envoyées que des données lorsque l'appareil de commande (SG1, SG2, ..., SGn) est privé de courant de charge.

**15.** Procédé selon l'une des revendications 1 à 14, **caractérisé en ce qu'**une interrogation de défaut en décalage de masse est effectuée à plusieurs reprises, avant de procéder à un affichage de défaut (ERROR).

**16.** Dispositif de contrôle du contact de masse d'abonnés/participants (SG1, SG2, ..., SGn) d'un système mis en réseau, la mise en réseau étant réalisée en ce que, par l'intermédiaire de deux lignes (CAN_H, CAN_L), des données sont envoyées et reçues, une ligne (CAN_H), existant à chaque abonné (SG1, SG2, ..., SGn) étant reliée à un potentiel commun (GND) des abonnés (SG1, SG2, ..., SGn), par l'intermédiaire d'un agencement résistif (RTH) et d'une mise en contact, et'est susceptible d'être reliée à une autre potentiel (VCC), par l'intermédiaire d'un interrupteur pouvant être commandé (transceiver), l'autre ligne (CAN_L), existant à chaque abonné (SG1, SG2, ..., SGn), étant reliée à un potentiel (VCC), spécifique à l'abonné, des abonnés (SG1, SG2, ..., SGn), par l'intermédiaire d'un l'agencement résistif (RTL) et est susceptible d'être reliée à un potentiel GND, par l'intermédiaire d'un interrupteur pouvant être commandé (transceiver) ainsi que d'un processus de contact, et la tension, chutant du fait du au moins un agencement résistif (RTH, RTL), étant amenée chaque fois à l'entrée d'un comparateur, à l'autre entrée duquel est amené un potentiel de comparaison, des conclusions sur l'état du processus de contact de masse de l'abonné (SG1, SG2, ..., SGn) étant tirées à partir du signal de sortie du comparateur.

**17.** Dispositif selon la revendication 16, **caractérisé en ce que** les différents potentiels (potentiels de référence), qui sont amenés aux entrées des comparateurs, sont générés par l'intermédiaire d'un multiplexeur (Mux), à partir d'une tension et sont amenés aux entrées respectives des comparateurs.

**18.** Dispositif selon la revendication 16 ou 17, **caractérisé en ce que** les tensions (URTH, URTL, U Batt) à mesurer, sont amenées à une unité d'évaluation, par l'intermédiaire d'un multiplexeur (Mux).

Fig.1

Fig.2

12

Fig.3

Fig.4

## Fig.5

## Fig.6

Fig.7a

"dominant"

U CAN_H

"rezessiv"

delay

U GND

Fig.7b

"1"

TX

"0"

Fig.7c

"1"

Sample point

"0"

Fig.7d

"1"

ERROR

"0"

t1

Fig.8

VCC

R int

U R int

U CE

UF

CAN_H

RTH

GND SG